# EUROPÄISCHE PATENTSCHRIFT

(11) **EP 2 889 099 B1**
(45) Veröffentlichungstag und Bekanntmachung des Hinweises auf die Patenterteilung: **04.04.2018**
(21) Anmeldenummer: 14003761.5
(22) Anmeldetag: 08.11.2014
(51) Int. Cl.: B23D 59/00, B25H 3/00

(54) **Schnittschutz**
Cut protection
Protection contre les coupures

(30) Priorität: 14.11.2013 DE 102013019155
(43) Veröffentlichungstag der Anmeldung: 01.07.2015
(73) Patentinhaber: Andreas Stihl AG & Co. KG, 71336 Waiblingen (DE)
(72) Erfinder: Behringer, Patrick, D-73760 Ostfildern (DE); Häberlein, Jürgen, D-71364 Winnenden (DE); Keller, Sven, D-73663 Berglen (DE)
(74) Vertreter: Wasmuth, Rolf

(56) Entgegenhaltungen:
- US-A- 102 923
- US-A- 4 896 771
- US-A- 5 738 214
- US-A1- 2012 273 376
- US-B1- 6 267 239

## Beschreibung

Die Erfindung betrifft einen Schnittschutz der im Oberbegriff des Anspruchs 1 angegebenen Gattung.

Aus der US 102,923 A ist eine zweiteilige Transportvorrichtung für ein Kreissägeblatt bekannt. Die beiden Teilelemente der Transportvorrichtung sind an einem Ende mit einem Scharniergelenk schwenkbar verbunden und am anderen Ende mit einem Haken zusammengehalten.

Ein Benutzer kann das Werkzeug nur aus der Transportvorrichtung entnehmen, indem er den Haken löst und die beiden Teilelemente gegeneinander verschwenkt. Der Benutzer kann die Werkzeughülle nur dadurch verschließen, dass er die beiden Teilelemente derart ausrichtet, dass die Enden der Teilelemente aneinander liegen und er den Haken einhakt. Dies kann, insbesondere bei der Arbeit auf dem Feld, umständlich sein. In verhaktem Zustand kann sich der Haken von selbst und damit ungewollt lösen, wodurch die Funktion als Transportvorrichtung für ein Werkzeug nicht mehr gegeben ist. Zusätzlich sind durch die Verwendung eines Scharniergelenks die beiden Teilelemente bei vorgesehener Benutzung stets miteinander verbunden. Ein Trennen der beiden Teilelemente voneinander ist nicht vorgesehen.

Der Erfindung liegt die Aufgabe zugrunde, einen Schnittschutz der gattungsgemäßen Art derart weiterzubilden, dass er einfach und sicher handhabbar ist, wobei insbesondere ein

Rotationswerkzeug einfach und sicher in den Schnittschutz eingelegt und einfach und sicher wieder aus dem Schnittschutz herausgenommen werden kann.

Die Aufgabe wird durch einen Schnittschutz mit den Merkmalen des Anspruchs 1 gelöst.

Gemäß der Erfindung umfasst der mehrteilige Schnittschutz ein erstes Teilelement und zumindest ein weiteres Teilelement. Die Teilelemente sind an ihren Enden miteinander verbunden und bilden einen geschlossenen Umfang. Dadurch kann im Schnittschutz ein Rotationswerkzeug in seiner Schnittebene aufgenommen werden. Gegenüberliegende erste Enden der Teilelemente sind unter Ausbildung eines Schwenkgelenkes miteinander verbunden, und die zweiten Enden der Teilelemente sind lösbar miteinander festgelegt. Das Schwenkgelenk ist aus einer Rastaufnahme und aus einem Rastzapfen gebildet, welche im verrasteten Zustand das Schwenkgelenk bilden und durch Lösen der Verrastung zu trennen sind. Dadurch bildet das Schwenkgelenk zugleich eine zu öffnende Verbindung, so dass die Teilelemente nicht nur an einem Ende, sondern an beiden Enden einfach zu lösen sind. Ein bedarfsgerechtes Öffnen des Schnittschutzes an geeigneter Stelle ist erzielt.

Der Rastzapfen ist zweckmäßig am ersten Teilelement angeordnet und die Rastaufnahme am zweiten Teilelement ausgebildet.

Wird jeweils ein Schwenkgelenk an jeweils beiden Enden der Teilelemente vorgesehen, kann der Schnittschutz an einem beliebigen Schwenkgelenk geöffnet werden. Ein Teilelement des Schnittschutzes kann jeweils um das andere, nicht geöffnete Schwenkgelenk geschwenkt werden. Hierbei spielt es keine Rolle, welches der beiden Schwenkgelenke durch Lösen der Verrastung geöffnet wird. Damit ist der Schnittschutz einfach und benutzerfreundlich handhabbar. Befindet sich eines der Schwenkgelenke im verrasteten Zustand und das andere Schwenkgelenk im gelösten Zustand, so kann das eine Teilelement um das andere Teilelement - und zwar um das verrastete Schwenkgelenk - in Öffnungsrichtung rotiert werden. Ein Rotationswerkzeug kann damit einfach und sicher in den Schnittschutz eingelegt und entnommen werden.

Der Rastzapfen besitzt vorteilhaft eine Schräge, und das erste Teilelement ist zweckmäßig um das zweite Teilelement bis zu einem Maximalwinkel schwenkbar. Beim Schwenken des ersten Teilelementes um das zweite Teilelement über den Maximalwinkel hinaus rutscht die Rastaufnahme über die Schräge des Rastzapfens und löst die Verrastung. Dadurch ist gewährleistet, dass bei einem Schwenken des ersten Teilelements um das zweite Teilelement über den Maximalwinkel hinaus das Schwenkgelenk nicht beschädigt wird. Ferner kann damit auch erreicht werden, dass das Schwenkgelenk aus dem verrasteten Zustand gelöst werden kann, indem das erste Teilelement über den Maximalwinkel hinaus um das zweite Teilelement geschwenkt wird. Dadurch ist ein einfaches Lösen der beiden Teilelemente voneinander ohne Niederdrücken des Rastzapfens durch den Benutzer möglich.

Vorzugsweise ist am ersten Teilelement ein Anschlag für das zweite Teilelement ausgebildet, wobei der Anschlag das Schwenken des ersten Teilelements um das zweite Teilelement bis zu einem Maximalwinkel begrenzt. Der Anschlag ist vorteilhaft im Bereich des Schwenkgelenks angeordnet.

Vorteilhaft sind die Teilelemente Gleichteile. Dadurch können die beispielsweise als Kunststoffspritzgussteile hergestellten Teilelemente in derselben Spritzgussform hergestellt werden. Auch ist die spätere Handhabung eines Schnittschutzes aus Gleichteilen vereinfacht, da als Gleichteile eine Unterscheidung der beiden Teilelemente, welche den Schnittschutz bilden sollen, durch den Benutzer entfällt. Damit können die Gleichteile stets einfach gelöst und wieder zusammengesetzt werden.

Zweckmäßig sind das erste Teilelement und das zweite Teilelement biegesteif ausgeführt. Dadurch bleibt der Schnittschutz stets stabil bei Aufnahme von verschiedenen Werkzeuggeometrien, insbesondere bei zweiflügeligen Schneidblättern, wie beispielsweise ein Grasschneideblatt. Zweiflügelige Blätter liegen zweckmäßig nur an zwei Stellen im Schnittschutz an, insbesondere an einer Stelle am ersten Teilelement und an einer weiteren Stelle am zweiten Teilelement. Durch die biegesteife Ausführung der Teilelemente ist der Schnittschutz verwindungssteif, und das Werkzeug kann sich nicht ungewollt aus dem Schnittschutz lösen. Damit ist das Rotationswerkzeug im Schnittschutz stets sicher aufbewahrt.

Vorteilhaft ist das Teilelement als Aufnahmeprofil ausgebildet. Das Aufnahmeprofil besitzt zweckmäßig zwei sich gegenüberliegende Seitenwände. Dadurch kann das Werkzeug in das Aufnahmeprofil aufgenommen werden. Insbesondere umschließen die sich gegenüberliegenden Seitenwände das Werkzeug mindestens teilweise. Zweckmäßig ist die Klinge des Werkzeugs vom Aufnahmeprofil des Teilelements umschlossen. Dadurch ist gewährleistet, dass das rotierbare Werkzeug und insbesondere die Klingen des Rotationswerkzeugs nicht beschädigt werden können.

Vorzugsweise sind die Seitenwände parallel und mit einem Seitenwandabstand angeordnet, wobei die Seitenwände vorzugsweise über eine Stirnverbindung verbunden sind. Durch die parallele Anordnung der Seitenwände mit einem Seitenwandabstand kann insbesondere ein Rotationswerkzeug mit bestimmter Dicke aufgenommen werden, wobei die Dicke vorteilhaft kleiner oder gleich dem Seitenwandabstand ist. Durch die Verbindung der Seitenwände mit einer Stirnverbindung sind zum einen die Seitenwände stabil miteinander verbunden. Zum anderen schützt die Stirnverbindung das Rotationswerkzeug, insbesondere die Klinge des Rotationswerkzeugs, beispielsweise vor Beschädigung.

In einer Ausführung der Erfindung ist an der ersten Seitenwand mindestens ein erster Materialausbruch vorgesehen. Ein Materialausbruch spart Material und damit Gewicht. Aufgrund der Anordnung des Materialausbruchs an der Seitenwand bleibt die Stabilität des Teilelements und damit des Schnittschutzes weitgehend erhalten.

Vorzugsweise ist an der zweiten Seitenwand mindestens ein zweiter Materialausbruch vorgesehen. Vorteilhaft ist der erste Materialausbruch versetzt zum zweiten Materialausbruch angeordnet. Vorzugsweise ist an der zweiten Seitenwand gegenüberliegend zum ersten Materialausbruch Material vorhanden. Durch die versetzte Anordnung des ersten Materialausbruchs zum zweiten Materialausbruch wird verhindert, dass ein Benutzer über die Materialausbrüche durch den Schnittschutz durchgreifen kann. Dies wird auch dadurch verhindert, dass gegenüberliegend zum ersten Materialausbruch Material vorhanden ist. Zusätzlich ist damit ermöglicht, dass die Materialausbrüche großflächig ausgebildet sind, was Gewicht spart.

Vorzugsweise entsprechen die an einer Seitenwand von allen Materialausbrüchen geöffneten Flächen in Summe mindestens 10% der Oberfläche dieser Seitenwand. Dadurch tragen die Materialausbrüche zu einer erheblichen Materialeinsparung bei.

Zweckmäßig ist an einer Seitenwand eine Auflagefläche ausgebildet, wobei zweckmäßig das Werkzeug an der Auflagefläche mindestens teilweise anliegt. Dadurch, dass die Auflagefläche an nur einer Seitenwand ausgebildet ist, können beide Seitenwände relativ kurz, beispielsweise nur die Klinge des Werkzeugs umgreifend, ausgebildet sein, und gleichzeitig kann das Werkzeug durch die Auflagefläche sicher und stabil im Schnittschutz gehalten sein.

Vorteilhaft ist das Aufnahmeprofil bogenförmig, insbesondere teilkreisförmig, ausgebildet. Dadurch kann ein Rotationswerkzeug einfach im Schnittschutz aufgenommen werden. Außerdem ist der Schnittschutz nicht nur für einen Typ, sondern für verschiedene Typen von Rotationswerkzeugen, beispielsweise für zweiflüglige, dreiflüglige, vierflüglige Schnittmesser, kreisförmige Werkzeuge oder dergleichen, geeignet.

Vorzugsweise umspannt der Bogen des Aufnahmeprofils 180°. Dadurch besteht der Schnittschutz aus zwei Teilelementen, und jedes Teilelement umspannt die Hälfte des Schnittschutzes. Das Werkzeug lässt sich damit sehr leicht in den Schnittschutz einlegen, wodurch der Schnittschutz sehr einfach handhabbar ist.

Vorteilhaft ist im Teilelement mindestens eine trichterförmige Einführschräge ausgebildet. Wird das Werkzeug in den Schnittschutz eingelegt, so wird der Schnittschutz durch Schwenken des einen Teilelements um das andere Teilelement geschlossen. Mit Hilfe der Einführschräge wird ermöglicht, dass das Teilelement in das Werkzeug eingeschwenkt werden kann.

Zweckmäßig ist am Teilelement im Bereich des Schwenkgelenks eine Schale ausgebildet, wobei die Schale aus der Schnittebene des Rotationswerkzeugs herausragt. Damit kann der Schnittschutz ein Rotationswerkzeug aufnehmen, bei welchem die Messerklingen aus der Schnittebene herausragen. Durch die Anordnung der Schale im Bereich der Enden des Teilelements kann das Werkzeug seitlich in die Schale eingelegt werden. Vorteilhaft ist an einem Teilelement nur eine Schale ausgebildet, wobei die Schalen in Umfangsrichtung zu einer Seite - also seitlich - offen sind. Es kann vorteilhaft sein, dass die Schale aus zwei Halbschalen besteht, wobei je eine Halbschale an einem Teilelement angeordnet ist.

Vorteilhaft greifen die beiden Halbschalen der Teilelemente an ihren Fügekanten mit einer formschlüssigen Verbindung, insbesondere mit einer Nut-Feder-Verbindung, ineinander, wodurch der geschlossene Schnittschutz eine erhöhte Stabilität erreicht.

Ausführungsbeispiele der Erfindung werden im Folgenden anhand der Zeichnungen erläutert. Es zeigen:
- Fig. 1: eine Draufsicht auf einen mehrteiliger Schnittschutz in verrastetem Zustand,
- Fig. 2: eine Draufsicht auf den Schnittschutz in schwenkbarem Zustand,
- Fig. 3: eine Draufsicht auf den Schnittschutz in gelöstem Zustand,
- Fig. 4: eine perspektivische Ansicht eines Teilelements des Schnittschutzes,
- Fig. 5 bis 7: Detailansichten und Schnittzeichnungen eines Schwenkgelenks mit einer Rastaufnahme und einem Rastzapfen,
- Fig. 8 und 9: Schnittzeichnungen durch das Teilelement,
- Fig. 10 und 11: eine Draufsicht und eine Unteransicht des Schnittschutzes in einer weiteren Ausführungsvariante in verrastetem Zustand,
- Fig. 12: eine Draufsicht des Schnittschutzes in der weiteren Ausführungsvariante in schwenkbarem Zustand,
- Fig. 13: eine Draufsicht des Schnittschutzes in der weiteren Ausführungsvariante in gelöstem Zustand,
- Fig. 14: eine perspektivische Ansicht eines Teilelements des Schnittschutzes in der weiteren Ausführungsvariante,
- Fig. 15 und 16: Schnittzeichnungen durch das Teilelement des Schnittschutzes in der weiteren Ausführungsvariante,
- Fig. 17 bis 23: schematische Darstellungen eines Schnittschutzes in verrastetem, schwenkbarem, gelöstem Zustand mit unterschiedlicher Anzahl an Teilelementen sowie mit unterschiedlicher Anordnung der Schwenkgelenke mit Rastaufnahmen und Rastzapfen,
- Fig. 24 bis 26: Detailansichten des Teilelements im Bereich des Rastzapfens mit einem Anschlag,
- Fig. 27: eine Unteransicht auf den Schnittschutz des zweiten Teilelements am Anschlag des ersten Teilelementes,
- Fig. 28: eine perspektivische Ansicht des Teilelements des Schnittschutzes in einer weiteren Ausführungsvariante,
- Fig. 29 und 30: perspektivische Ansichten des Schnittschutzes im verrasteten Zustand in der weiteren Ausführungsvariante mit und ohne Werkzeug.

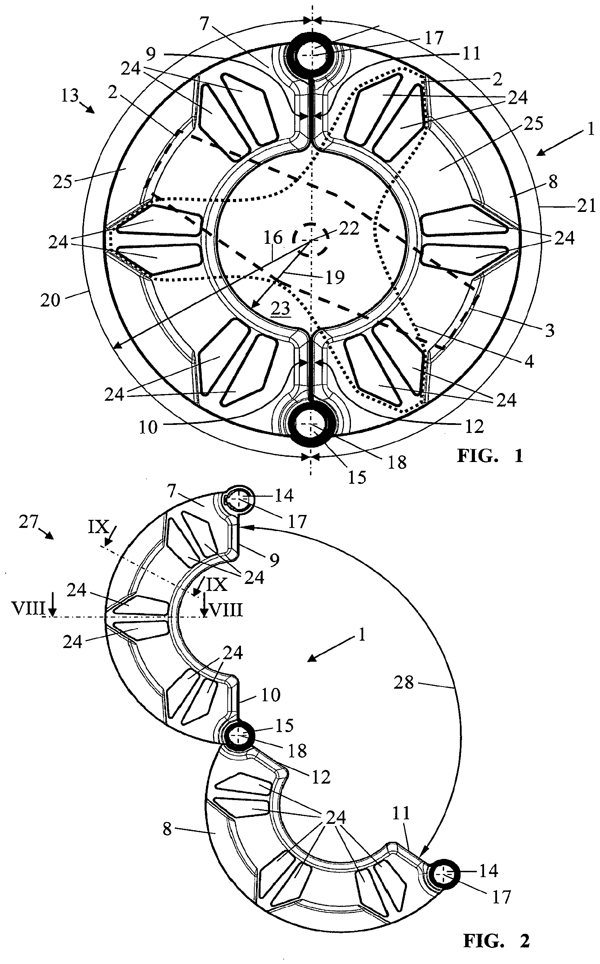

Fig. 1 zeigt als Ausführungsbeispiel einen Schnittschutz 1 für ein Rotationswerkzeug 2, dessen Rotationsebene in einer Schnittschutzebene liegt. Der Schnittschutz 1 ist in einem Schutzzustand 13 dargestellt. Im Schutzzustand 13 ist das Werkzeug 2 sicher im Schnittschutz 1 aufbewahrt.

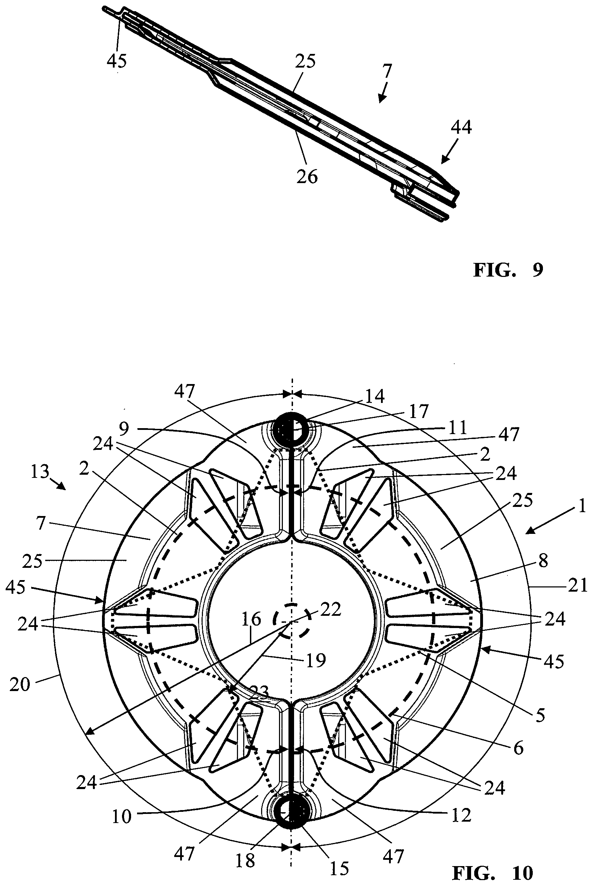

Das Werkzeug 2 wird beispielsweise in einem Freischneider, einem Trennschleifer, einer Kreissäge oder dergleichen verwendet. Das Werkzeug 2 kann als in Fig. 1 strichliert dargestelltes zweiflügliges Blatt 3, beispielsweise als Grasschneideblatt, Dickichtmesser oder dergleichen, sowie als dreiflügliges Blatt 4 (punktiert dargestellt in Fig. 1), beispielsweise als Dickichtmesser, ausgeführt sein. Das Werkzeug 2 kann auch, wie in Fig. 10 dargestellt, als vierflügliges Blatt 5, beispielsweise als Grasschneideblatt, oder als Kreissägeblatt 6 mit Spitzzahn oder mit Meißelzahn, aus Stahl oder aus Hartmetall oder dergleichen, ausgeführt sein. Der Schnittschutz 1 kann demnach Werkzeuge 2 unterschiedlicher Geometrie, insbesondere mit unterschiedlicher Form, mit unterschiedlichem Durchmesser und mit unterschiedlicher Dicke aufnehmen.

Der in Fig. 1 dargestellte Schnittschutz 1 besteht aus einem ersten Teilelement 7 und einem zweiten Teilelement 8. Das erste Teilelement 7 besitzt ein erstes Ende 9 und ein zweites Ende 10, und auch das zweite Teilelement 8 besitzt ein erstes Ende 11 und ein zweites Ende 12. Im Schutzzustand 13 liegt das erste Ende 9 des ersten Teilelements 7 am ersten Ende 11 des zweiten Teilelements 8 an. Ebenso liegt im Schutzzustand 13 das zweite Ende 10 des ersten Teilelements 7 am zweiten Ende 12 des zweiten Teilelements 8 an. Die beiden Teilelemente 7, 8 sind unter Ausbildung eines ersten Schwenkgelenkes 14 und eines zweiten Schwenkgelenkes 15 miteinander verbunden. Das erste Schwenkgelenk 14 ist an den ersten Enden 9, 11 der Teilelemente 7, 8 ausgebildet. Das zweite Schwenkgelenk 15 ist an den zweiten Enden 10, 12 der Teilelemente 7, 8 ausgebildet. Beide Schwenkgelenke 14, 15 und damit alle Enden 9, 10, 11, 12 der Teilelemente 7, 8 sind lösbar miteinander verbunden.

Der Schnittschutz 1 ist im Schutzzustand 13 in Draufsicht annähernd kreisförmig um einen Mittelpunkt 22. Die Kreisform ist von einem Außenradius 16 definiert. Die Teilelemente 7, 8 bilden damit im Schutzzustand 13 einen geschlossenen Umfang. Durch die Kreisform ist ermöglicht, dass Werkzeuge 2, die im Betrieb in einer Rotationsebene rotieren und deren Außendurchmesser kleiner ist als der doppelte Außenradius 16 des Schnittschutzes 1, im Schnittschutz 1 aufgenommen werden können.

Die Schwenkgelenke 14, 15 stehen teilweise über den Außenradius 16 über; im Bereich der Schwenkgelenke 14, 15 weicht der Schnittschutz 1 demnach von der Kreisform ab. Die annähernd kreisförmigen Schwenkgelenke 14, 15 besitzen jeweils einen Kreismittelpunkt 17, 18. Die Kreismittelpunkte 17, 18 liegen in Draufsicht innerhalb des Schnittschutzes 1; demnach ist der Abstand des ersten Kreismittelpunkts 17 vom zweiten Kreismittelpunkt 18 kleiner als der zweifache Außenradius 16. Durch diese Anordnung der Schwenkgelenke 14, 15 sind die Schwenkgelenke 14, 15 einerseits durch die Anordnung der Mittelpunkte 17, 18 innerhalb des Schnittschutzes 1 geschützt, und andererseits ist durch das teilweise Überstehen der Schwenkgelenke 14, 15 über den Außenradius 16 ein Schwenken des zweiten Teilelements 8 um das erste Teilelement 7 ermöglicht.

Im Ausführungsbeispiel sind die beiden Teilelemente 7, 8 als Gleichteile ausgeführt. Da die beiden Teilelemente 7, 8 Gleichteile sind und der Schnittschutz 1 in Draufsicht kreisförmig ist, sind die beiden Teilelemente 7, 8 halbkreisförmig und spannen jeweils einen Bogen 20, 21 von 180° auf.

Im Zentrum des Schnittschutzes 1, nämlich um den Mittelpunkt 22 des Schnittschutzes 1, besitzt der Schnittschutz 1 eine kreisförmige Aussparung 23 mit Innenradius 19. Ist der Schnittschutz 1 im Schutzzustand 13 und ist kein Werkzeug 2 im Schnittschutz 1 eingelegt, so kann durch die kreisförmige Aussparung 23 durchgegriffen werden. Die kreisförmige Aussparung 23 spart Material an den beiden Teilelementen 7, 8 und damit am Schnittschutz 1, wodurch der Schnittschutz 1 leichter ist. Zusätzlich ist durch die kreisförmige Aussparung 23 erkennbar, welches Werkzeug 2 im Schnittschutz 1 eingelegt ist. Der Schnittschutz 1 kann mit eingelegtem Werkzeug 2 im Schutzzustand 13 durch die kreisförmige Aussparung 23 am Werkzeug 2 gehalten und getragen werden. Auch erleichtert die kreisförmige Aussparung 23 das Einlegen sowie das Entfernen des Werkzeugs 2 vom Schnittschutz 1. Ist der Innenradius 19 groß genug gewählt, so kann der Schnittschutz 1 das am Arbeitsgerät, beispielsweise am Freischneider, befestigte Werkzeug 2 aufnehmen. Dadurch ist der Schnittschutz 1 nicht nur für den Schutz des Werkzeugs 2 im abmontierten, vom Arbeitsgerät entfernten Zustand, sondern auch als Schnittschutz 1 für das am Arbeitsgerät montierte Werkzeug 2 verwendbar.

Die Teilelemente 7, 8 sind biegesteif, und zwar derart, dass der Schnittschutz 1 auch im Schutzzustand 13 biegesteif ist. Dies bedeutet, dass der Schnittschutz 1 bei Werkzeugen 2, die nur sehr wenig zur Stabilität des Schnittschutzes 1 beitragen, wie beispielsweise das zweiflüglige Blatt 3, dennoch stabil und verwindungssteif bleibt. Dadurch ist das Werkzeug 2 sicher im Schnittschutz 1 aufbewahrt.

Die Teilelemente 7, 8 besitzen jeweils eine erste Seitenwand 25, die in Draufsicht in Fig. 1 sichtbar ist. In der ersten Seitenwand 25 sind im Ausführungsbeispiel je Teilelement 7, 8 sechs Materialausbrüche 24 angeordnet. Die Materialausbrüche 24 dienen zur Materialeinsparung und damit zur Senkung des Gewichts des Schnittschutzes 1. Durch die Anbringung der Materialausbrüche 24 auf der ersten Seitenwand 25 ist die Stabilität des Schnittschutzes 1 unwesentlich beeinträchtigt. Die Summe der von den Materialausbrüchen 24 geöffneten Flächen beträgt mindestens 10% der Oberfläche der ersten Seitenwand 25.

Fig. 2 zeigt den Schnittschutz 1 in einem schwenkbaren Zustand 27. Im schwenkbaren Zustand 27 ist eines der Schwenkgelenke 14, 15, nämlich in Fig. 2 das erste Schwenkgelenk 14, von der Verrastung gelöst. Das andere Schwenkgelenk 15, 14, in Fig. 2, das zweite Schwenkgelenk 15, verbleibt im verrasteten Zustand und bildet damit das Schwenkgelenk. Im schwenkbaren Zustand 27 ist somit das zweite Teilelement 8 um das erste Teilelement 7 um das zweite Schenkgelenk 15 schwenkbar. Im schwenkbaren Zustand 27 sind die ersten Enden 9, 11 sowie die zweiten Enden 10, 12 voneinander getrennt. Bewegen sich die Enden 9, 10, 11, 12 bei der Schwenkbewegung des zweiten Teilelements 8 um das erste Teilelement 7 aufeinander zu, so schließt der Schnittschutz 1, wodurch der schwenkbare Zustand 27 mit der Verrastung des ersten Schwenkgelenks 14 in den in Fig. 1 gezeigten Schutzzustand 13 übergeht.

Im schwenkbaren Zustand 27 kann ein Werkzeug 2 in den Schnittschutz 1 eingelegt werden, und durch Schwenken des zweiten Teilelements 8 um das erste Teilelement 7 wird der Schnittschutz 1 geschlossen und das Werkzeug 2 geschützt. Befindet sich ein Werkzeug 2 im Schnittschutz 1 und ist der Schnittschutz 1 im Schutzzustand 13, so kann durch Öffnen eines der Schwenkgelenke 14, 15 das zweite Teilelement 8 um das erste Teilelement 7 geschwenkt werden, und das Werkzeug 2 kann aus dem Schnittschutz 1 herausgenommen werden. Beim Öffnen des Schnittschutzes 1 bewegen sich die Enden 9, 10, 11, 12 bei der Schwenkbewegung des zweiten Teilelements 8 relativ zum ersten Teilelement 7 voneinander weg.

Die beiden Teilelemente 7, 8 sind bis zu einem Maximalwinkel 28 gegeneinander verschwenkbar. Der Maximalwinkel 28 entspricht im Ausführungsbeispiel dem Winkel zwischen dem ersten Ende 9 des ersten Teilelements 7 und dem ersten Ende 11 des zweiten Teilelements 8, gemessen um den zweiten Mittelpunkt 18 des zweiten Schwenkgelenks 15. Im Ausführungsbeispiel beträgt der Maximalwinkel 28 ca. 130°.

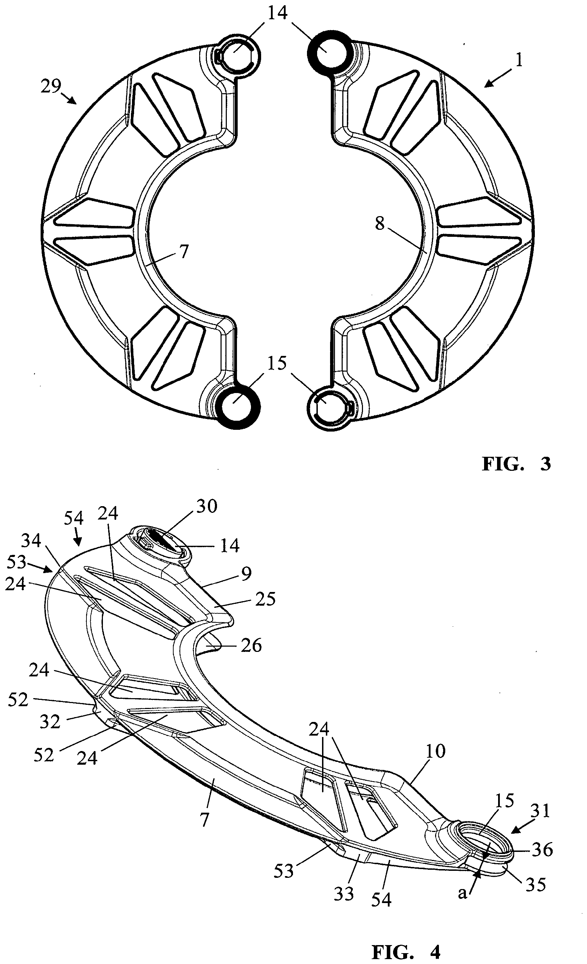

In Fig. 3 ist der Schnittschutz 1 in einem getrennten Zustand 29 dargestellt. Im getrennten Zustand 29 sind beide Schwenkgelenke 14, 15 von der Verrastung gelöst, womit die beiden Teilelemente 7, 8 voneinander komplett getrennt sind. Im getrennten Zustand 29 können die beiden Teilelemente 7, 8 platzsparend aufbewahrt werden.

Fig. 4 zeigt das erste Teilelement 7 in perspektivischer Ansicht. In Fig. 4 sind die Materialausbrüche 24 zu erkennen, die an der ersten Seitenwand 25 angeordnet sind und die erste Seitenwand 25 durchdringen. Der ersten Seitenwand 25 liegt eine zweite Seitenwand 26 gegenüber. An der zweiten Seitenwand 26 sind Taschen 32, 33, 34 ausgebildet. Die Taschen 32, 33, 34 sind gegenüberliegend zu den Materialausbrüchen 24 angeordnet. Je nach Typ des Werkzeugs 2, beispielsweise das dreiflüglige Blatt 4 oder das vierflüglige Blatt 5, wird mindestens eine Blattspitze des Werkzeugs 2 in mindestens eine der Taschen 32, 33, 34 eingelegt. Hierbei ist die mittig am Teilelement 7 angeordnete Tasche 32 mit zwei spitz zulaufenden Seitenwänden 52 ausgebildet. Liegt das Werkzeug 2 mit der Blattspitze in der mittigen Tasche 32, so fixiert die mittlere Tasche 32 das Werkzeug 2. Die seitlichen Taschen 33, 34 besitzen jeweils nur eine spitz zulaufende Seitenwand 53. Die andere Seite der seitlichen Taschen 33, 34, also die Seite, die den Schwenkgelenken 14, 15 zugewandt ist, ist im Ausführungsbeispiel entfernt und bildet eine insbesondere trichterförmige Einführschräge 54. Dadurch kann das Werkzeug 2 in eines der beiden Teilelemente 7, 8 eingelegt werden, wobei das andere Teilelement 8, 7 um das Schwenkgelenk 15 schwenkt und dadurch kollisionslos mit der Blattspitze des Werkzeugs 2 vom schwenkbaren Zustand 27 in den Schutzzustand 13 überführbar ist.

Die Schwenkgelenke 14, 15 umfassen einen Rastzapfen 30 und eine Rastaufnahme 31, wobei an jedem Teilelement 7, 8 jeweils ein Rastzapfen 30 und eine Rastaufnahme 31 angeordnet sind. Beispielhaft ist in Fig. 4 am ersten Teilelement 7 der Rastzapfen 30 am ersten Schwenkgelenk 14 und die Rastaufnahme 31 am zweiten Schwenkgelenk 15 vorgesehen. Die Rastaufnahme 31 besteht aus einer Auflagewand 35 und einem Ring 36. Zwischen Auflagewand 35 und Ring 36 ist ein Aufnahmeabstand a vorgesehen. Der Ring 36 und die Auflagewand 35 sind parallel zueinander ausgerichtet. Sowohl der Ring 36 als auch die Auflagewand 35 sind am zweiten Ende 10 des ersten Teilelements 7 angeordnet. Hierbei ist der Ring 36 an der ersten Seitenwand 25 und die Auflage 35 an der zweiten Seitenwand 26 befestigt. In Draufsicht stimmen die äußere Begrenzung des Rings 36 mit der äußeren Begrenzung der Auflagewand 35 überein. Die Öffnung des Rings ist so ausgebildet, dass der Rastzapfen 30 in die Öffnung des Rings 36 eingeschoben werden kann. Die Rastaufnahme 31, bestehend aus Auflagewand 35 und Ring 36, verrastet hierbei mit dem Rastzapfen 30.

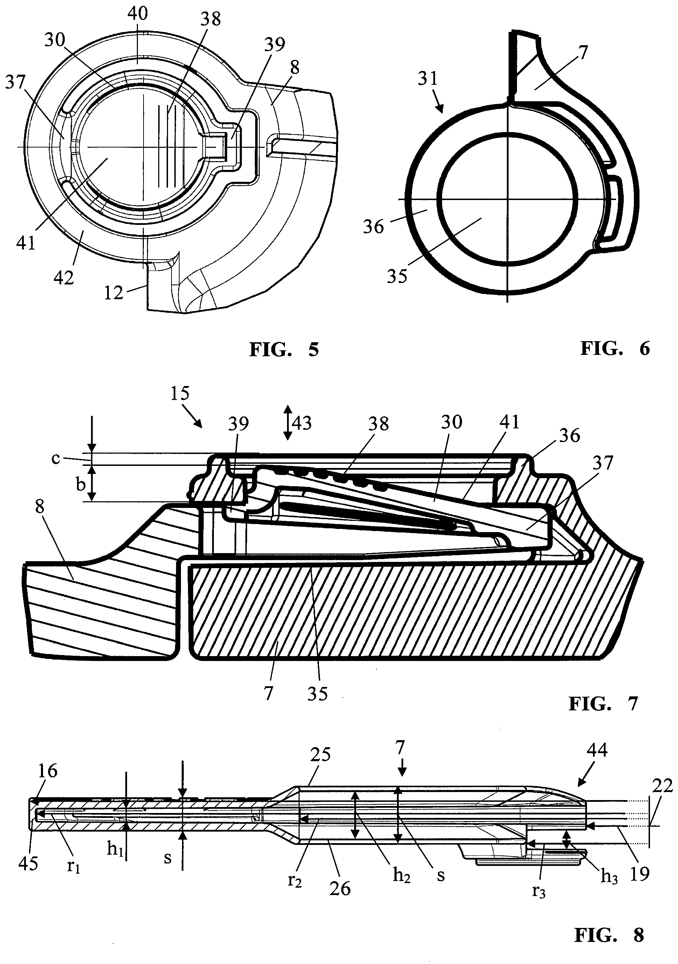

Die Figuren 5 bis 7 zeigen den Rastzapfen 30, die Rastaufnahme 31 sowie das Zusammenwirken des Rastzapfens 30 mit der Rastaufnahme 31 im verrasteten Zustand als Schwenkgelenk 15. In Fig. 5 ist der am zweiten Teilelement 8 angeformte Rastzapfen 30 beispielhaft dargestellt, wobei durch die Gleichteile der beiden Teilelemente 7, 8 der Rastzapfen 30 am ersten Teilelement 7 entsprechend angeformt ist. Am Teilelement 8 ist ein Halter 42 angeformt. Der Halter 42 ist annähernd dreiviertelkreisförmig. Der Halter 42 ist ähnlich einem Ring. Am Halter 42 ist über eine federnde Verbindung 37 der Rastzapfen 30 gehalten. Die federnde Verbindung 37 erstreckt sich zwischen Halter 42 und Rastzapfen 30 über ca. 20% des ringförmigen Spalts 40 zwischen Rastzapfen 30 und Halter 42. Dadurch ist gewährleistet, dass der Rastzapfen 30 zwar über die federnde Verbindung 37 am Halter 42 und damit am Teilelement 8 festgelegt ist, der Rastzapfen 30 sich jedoch zugleich federnd relativ zum Teilelement 8 bewegen lässt. Die Bewegungsrichtung 43 des Rastzapfens 30 ist in Fig. 7 dargestellt und zeigt beim Einfedern in Richtung auf die Auflagewand 35 des anderen Teilelements 7 bzw. beim Ausfedern bewegt sich der Rastzapfen 30 in Bewegungsrichtung 43 von der Auflagewand 35 weg. Die Rastverbindung zwischen Rastzapfen 30 und Rastaufnahme 31 entspricht im Ausführungsbeispiel einer Schnappverbindung.

Wie in den Figuren 5 und 7 gezeigt, ist am Rastzapfen 30 gegenüberliegend zur federnden Verbindung 37 eine Nase 39 ausgebildet. Bildet der Rastzapfen 30 mit der Rastaufnahme 31 ein Schwenkgelenk 15 (wie beispielsweise in Fig. 7), so ist der Rastzapfen 30 mit der Rastaufnahme 31 verrastet, und die Nase 39 liegt am Rand des Rings 36 auf. Damit steht die federnde Verbindung 37 in verrastetem Zustand leicht unter Spannung, wodurch die beiden Teilelemente 7, 8 stabil miteinander verrastet sind.

Zur griffigen Handhabung eines Bedieners beim Drücken des Rastzapfens 30 in Richtung auf die Auflagewand 35 sind an der Oberseite des Rastzapfens 30 mehrere Rillen 38 angebracht. Die Rillen 38 entsprechen Hebungen und Senkungen in der Oberfläche des Rastzapfens 30. Die Rillen 38 sind im Ausführungsbeispiel parallel zum zweiten Ende 12 des zweiten Teilelements 8 sowie parallel zur federnden Verbindung 37. Entsprechendes gilt für das erste Teilelement 7.

Im Bereich zwischen der federnden Verbindung 37 und den Rillen 38 ist am Rastzapfen 30 eine Schräge 41 angeordnet. Wird das zweite Teilelement 8 über den in Fig. 2 dargestellten Maximalwinkel 28 hinaus um das erste Teilelement 7 verschwenkt, so rutscht der Rastzapfen 30 über die Schräge 41 unter den Ring 36, wodurch der Ring 36 über die Schräge 41 den Rastzapfen 30 in Bewegungsrichtung 43 in Richtung auf die Auflagewand 35 entgegen der Kraft durch die federnde Verbindung 37 drückt. Dadurch rutscht der Rastzapfen 30 aus der Rastaufnahme 31 heraus, wodurch die Rastverbindung gelöst wird. Durch diese Konstruktion wird verhindert, dass bei Überdrehen des zweiten Teilelements 8 um das erste Teilelement 7 das Schwenkgelenk 14, 15 beschädigt wird.

Zwischen der unteren Seite des Rings 36, also der der Auflagewand 35 zugewandten Seite, und der höchsten Stelle des Rastzapfens 30, also der am weitesten von der Auflagewand 35 entfernten Stelle, ist im verrasteten Zustand ein Überstand b vorgesehen. Soll die Rastverbindung gelöst werden, so muss der Rastzapfen 30 in Bewegungsrichtung 43 in Richtung auf die Auflagewand 35 um mindestens den Überstand b hinuntergedrückt werden, und anschließend muss das zweite Teilelement 8 aus dem ersten Teilelement 7 herausgedreht werden.

Im verrasteten Zustand ist zwischen der oberen Seite des Rings 36 und der höchsten Stelle des Rastzapfens 30 ein Sicherheitsabstand c vorgesehen. Durch den Sicherheitsabstand c kann ein versehentliches Niederdrücken des Rastzapfens 30 und damit ein versehentliches Öffnen der Rastverbindung verhindert werden. Zudem liegt der Rastzapfen 30 geschützt innerhalb der Rastaufnahme 31, wodurch eine Beschädigung des Rastzapfens 30 verhindert ist.

Fig. 8 zeigt einen Schnitt durch das erste Teilelement 7 entlang der in Fig. 2 gezeigten Schnittlinie VIII-VIII, welche zwischen den mittleren Materialausbrüchen 24 verläuft. Aufgrund der Gleichteile gilt Entsprechendes für das zweite Teilelement 8. Wie in Fig. 8 gezeigt, ist das Teilelement 7, 8 als Aufnahmeprofil 44 ausgebildet. Das Aufnahmeprofil 44 umfasst die zwei Seitenwände 25, 26, die weitgehend parallel zueinander verlaufen. Die Seitenwände 25, 26 sind mit einem Seitenwandabstand s zueinander angeordnet, wobei der Seitenwandabstand s veränderlich ist. Die beiden Seitenwände 25, 26 sind über eine Stirnverbindung 45 miteinander verbunden. Die Stirnverbindung 45 verbindet die beiden Seitenwände 25, 26 am Außenradius 16. Im Ausführungsbeispiel verläuft die Stirnverbindung 45 umlaufend und ohne Unterbrechung.

Ein erster Radius r₁ erstreckt sich vom Mittelpunkt 22 des Schnittschutzes 1 bis zur Innenwand der Stirnverbindung 45. Entlang des ersten Radius r₁ entspricht der Seitenwandabstand s der ersten Seitenwand 25 von der zweiten Seitenwand 26 immer mindestens einer ersten Höhe hi. Ein Werkzeug 2 mit höchstens einer Radialerstreckung entsprechend dem ersten Radius r₁ und höchstens einer Dicke entsprechend der ersten Höhe hi kann damit in den Schnittschutz 1 eingelegt werden. Typischerweise besitzen die für den Schnittschutz 1 geeigneten Werkzeuge 2 einen Außendurchmesser von 210 bis 270 mm, insbesondere von 230 bis 250 mm, und eine Dicke insbesondere an der Schneide von 1 bis 5 mm, insbesondere von 1,7 bis 3 mm.

Die erste Seitenwand 25 besitzt den Seitenwandabstand s zur zweiten Seitenwand 26 mit einer zweiten Höhe h₂, die sich vom Innenradius 19 bis zu einem zweiten Radius r₂ vom Mittelpunkt 22 des Schnittschutzes 1 erstreckt. Die zweite Höhe h₂ ist größer als die erste Höhe hi. Der zweite Radius r₂ ist kleiner als der erste Radius r₁. Ein Werkzeug 2 mit höchstens einer Radialerstreckung des zweiten Radius r₂ kann in diesem Bereich des Schnittschutzes 1 eingelegt werden.

Unterhalb der vom ersten Radius r₁ und erster Höhe hi gebildeten Aufnahme für ein Werkzeug 2 ist eine weitere Aufnahme für ein weiteres Werkzeug 2 angeordnet. Die weitere Aufnahme erstreckt sich vom Innenradius 19 bis zu einem dritten Radius r₃. Die weitere Aufnahme besitzt eine dritte Höhe h₃. Die dritte Höhe h₃ ist größer als die erste Höhe h₁, und der dritte Radius r₃ ist kleiner als der erste Radius r₁. Durch die verschiedenen Radien r₁, r₂, r₃ sowie durch die verschiedenen Höhen h₁, h₂, h₃ können unterschiedliche Werkzeuge 2 in den Schnittschutz 1 eingelegt und vom Schnittschutz 1 geschützt werden. In einer weiteren Ausführungsvariante können auch mehrere Werkzeuge 2 im Schnittschutz 1 gleichzeitig untergebracht werden.

Fig. 9 zeigt einen Schnitt durch das Teilelement 7, 8 entlang der in Fig. 2 gezeigten Schnittlinie IX-IX. Entsprechend zur Fig. 8 erstrecken sich die Werkzeugaufnahmen in Fig. 9 radial entlang des Teilelements 7, 8.

Die Figuren 10 bis 16 zeigen eine weitere Ausführungsvariante für den Schnittschutz 1. Diese weitere Ausführungsvariante ermöglicht die Aufnahme eines Werkzeugs 2, welches beispielsweise Messerklingen besitzt, die aus der Schnittebene herausragen, in der das Werkzeug 2 im Betrieb rotiert. Solch ein Werkzeug 2 kann beispielsweise ein Häckselmesser sein. In den Figuren 10 bis 16 bezeichnen gleiche Bezugszeichen gleiche Bauelemente wie in der ursprünglichen Ausführungsvariante nach den Fig. 1 bis 9.

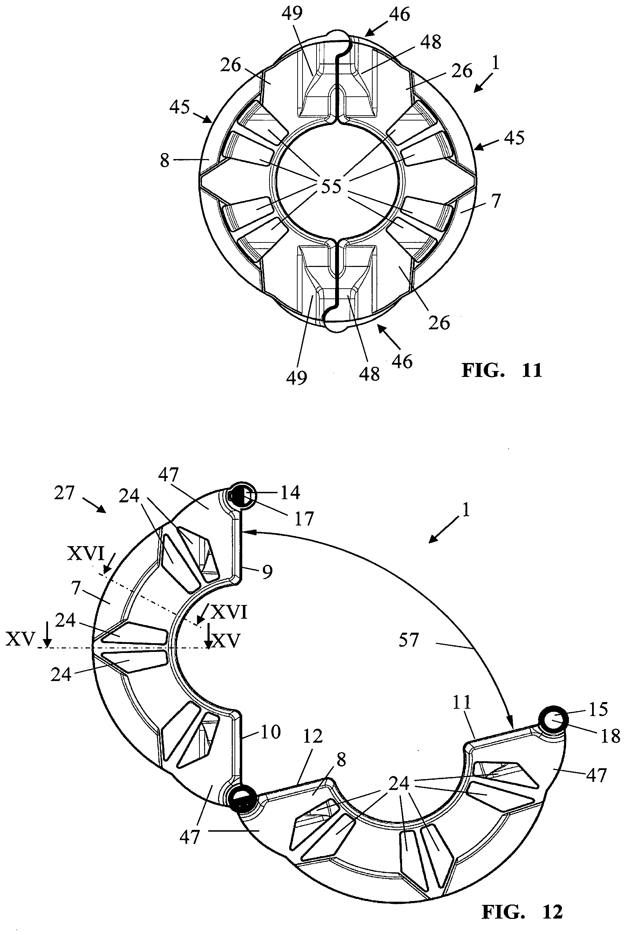

Fig. 10 zeigt den Schnittschutz 1 in Draufsicht, Fig. 11 zeigt den Schnittschutz 1 in Unteransicht. In beiden Figuren 10, 11 ist der Schnittschutz 1 im Schutzzustand 13 dargestellt. Die beiden Teilelemente 7, 8 sind über die beiden Schwenkgelenke 14, 15 miteinander verbunden. In dieser Ausführungsvariante ist der Abstand des ersten Mittelpunkts 17 des ersten Schwenkgelenks 14 vom zweiten Mittelpunkt 18 des zweiten Schwenkgelenks 15 größer als der doppelte Außenradius 16. Um die Schwenkgelenke 14, 15 vor Beschädigung zu schützen, sind an den Enden 9 bis 12 an der am Außenradius 16 angeordneten Stirnverbindung 45 Ausbuchtungen 47 angeordnet. Die Ausbuchtungen 47 sind in Draufsicht teilkreisförmig. Die Ausbuchtungen 47 erstrecken sich über die Mittelpunkte 17, 18 der Schwenkgelenke 14, 15 hinaus. Dadurch sind die Schwenkgelenke 14, 15 weitgehend vor Beschädigung geschützt. Durch die Ausbuchtung 47 kann zusätzlich ein Werkzeug 2 mit einem größeren Durchmesser als der zweifache Außenradius 16 vom Schnittschutz 1 aufgenommen werden. Im Ausführungsbeispiel nach den Figuren 10 bis 16 handelt es sich hierbei um ein nicht dargestelltes Häckselmesser, welches ein zweiflügliges Blatt aufweist und bei welchem die Messerklingen aus der Schnittebene herausragen.

Auf der zweiten Seitenwand 26 sind im Bereich der Ausbuchtung 47 in Fig. 11 dargestellte Schalen 46 angeordnet. Hierbei ist jeweils eine Schale 46 an einem Schwenkgelenk 14, 15 ausgebildet. Die Schale 46 ragt aus der Schnittebene heraus. Die Schale 46 besteht aus einer ersten Halbschale 48 und einer zweiten Halbschale 49. Beim Öffnen eines Schwenkgelenks 14, 15 werden die Halbschalen 48, 49 voneinander getrennt. Dadurch kann ein Häckselmesser, welches mindestens eine Messerklinge aufweist, die aus der Schnittebene herausragt, aus der Schale 46 herausgenommen werden. Die Halbschalen 48, 49 halbieren das Gesamtvolumen der Schale 46 annähernd zu gleichen Teilen. Die Halbschalen 48, 49 sind annähernd identisch ausgebildet, im Bereich der Schwenkgelenke 14, 15 ergeben sich jedoch aufgrund des Rastmechanismus mit Rastzapfen 30 und Rastaufnahme 31 geometrische Unterschiede.

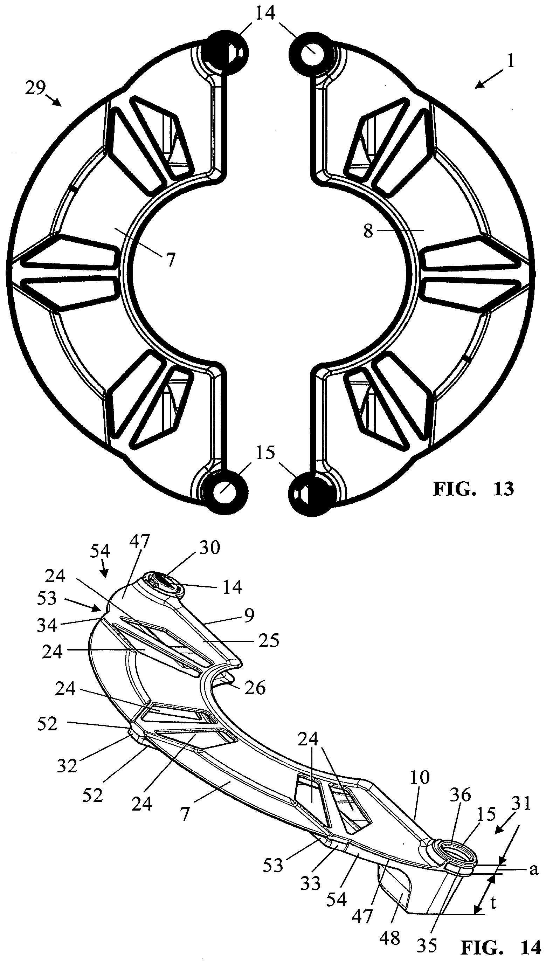

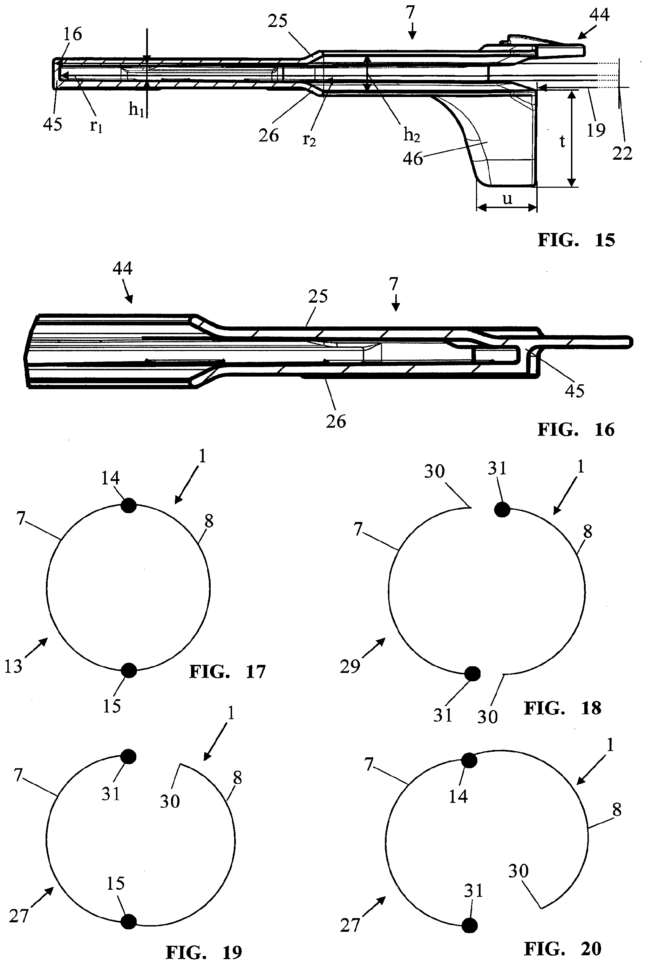

In den Figuren 14 und 15 ist dargestellt, dass die Schale 46 um eine Schalentiefe t, von der zweiten Seitenwand 26 ausgehend, von der zweiten Seitenwand 26 weg zeigt. Damit kann das Werkzeug 2 höchstens um die Schalentiefe t aus der Schnittebene herausragen. Die Schale 46 besitzt eine in Fig. 15 eingezeichnete Schalenbreite u. Durch die Schalenbreite u ist gewährleistet, dass Werkzeuge 2 mit unterschiedlichem Durchmesser im Schnittschutz aufgenommen werden können. Für den Durchmesser des Werkzeuges 2 ist hierbei der Abstand der beiden Messerklingen voneinander maßgebend. Der kleinste Durchmesser des Werkzeuges 2 mit aus der Schnittebene herausragenden Messerklingen entspricht hierbei dem zweifachen Innenradius 19. Der größte Durchmesser des Werkzeuges 2 mit aus der Schnittebene herausragenden Messerklingen entspricht hierbei dem zweifachen Innenradius 19 plus der zweifachen Schalenbreite u.

In Fig. 11 ist zudem ersichtlich, dass auch an der zweiten Seitenwand 26 Materialausbrüche 55 angeordnet sind. Im Ausführungsbeispiel sind an jedem Teilelement vier Materialausbrüche 55 angeordnet. Die Materialausbrüche 55 der zweiten Seitenwand 26 liegen versetzt zu den Materialausbrüchen 24 der ersten Seitenwand 25. Ein Durchgreifen durch einen Materialausbruch 55 der zweiten Seitenwand 26 und durch einen Materialausbruch 24 der ersten Seitenwand 25 ist damit verhindert.

Während die Figuren 10 und 11 den Schnittschutz 1 im Schutzzustand 13 zeigen, ist in Fig. 12 der Schnittschutz 1 im geöffneten Zustand 27 dargestellt. Die beiden Teilelemente 7, 8 sind in der in Fig. 12 gezeigten Position bis zu einem Öffnungswinkel 57 gegeneinander verschwenkt, wobei der Öffnungswinkel 57 kleiner ist als der Maximalwinkel 28. In Fig. 13 ist der Schnittschutz 1 in getrenntem Zustand 29 gezeigt, in welchem die beiden Teilelemente 7, 8 voneinander getrennt sind.

Fig. 14 zeigt ein Teilelement 7, 8 in perspektivischer Darstellung, wobei am Teilelement 7, 8 auch in dieser Ausführungsvariante Taschen 32, 33, 34 an der zweiten Seitenwand 26 vorgesehen sind. Zusätzlich sind die Halbschalen 48, 49 an der zweiten Seitenwand 26 angeordnet. Damit kann in dieser Ausführungsvariante der Schnittschutz 1 sämtliche Werkzeuge 2 der anderen Variante, insbesondere ein zweiflügliges Blatt 3, ein dreiflügliges Blatt 4, ein vierflügliges Blatt 5, ein Kreissägeblatt 6 oder dergleichen, aufnehmen oder der Schnittschutz 1 kann ein Werkzeug 2 mit einem Messer, welches aus der Schnittebene herausragt, wie beispielsweise ein Häckselmesser, aufnehmen.

Die Figuren 15 und 16 zeigen Schnitte entlang einer in Fig. 12 gezeigten Schnittlinie XVI-XVI bzw. XV-XV des Teilelements 7, 8. Aus diesen Schnitten ist erkennbar, dass der Schnittschutz 1 einerseits Werkzeuge 2 aufnehmen kann, die nicht aus der Schnittebene herausragen. Andererseits kann der Schnittschutz 1 über die Schalen 46 Werkzeuge 2 aufnehmen, die aus der Schnittebene herausragen. Zusätzlich ist in Fig. 15 erkennbar, dass die Schale 46 sich deutlich von der zweiten Seitenwand 26 weg erstreckt. Damit kann der Schnittschutz 1 verschiedene Werkzeuge 2 mit unterschiedlichen Durchmessern, unterschiedlichen Dicken sowie unterschiedlichen Geometrien aufnehmen.

Die Figuren 17 bis 23 zeigen Prinzipdarstellungen des mehrteiligen Schnittschutzes 1. Die Figuren 17 bis 20 zeigen hierbei die Ausführungsvarianten nach den Figuren 1 bis 16. Fig. 17 zeigt den Schnittschutz 1 im Schutzzustand 13, Fig. 18 den Schnittschutz 1 im getrennten Zustand 29 und die Figuren 19 und 20 den Schnittschutz 1 im schwenkbaren Zustand 27. Der Schnittschutz 1 ist zweiteilig, bestehend aus dem ersten Teilelement 7 und dem zweiten Teilelement 8. Die beiden Teilelemente 7, 8 sind im in Fig. 17 dargestellten Schutzzustand 13 über die Schwenkgelenke 14, 15 miteinander verrastet. In Fig. 18 sind die Rastzapfen 30 von den Rastaufnahmen 31 an beiden Enden der beiden Teilelemente 7, 8 voneinander getrennt. Nach Fig. 18 ist an jedem Teilelement 7, 8 jeweils ein Rastzapfen 30 und eine Rastaufnahme 31 angeordnet.

In den Figuren 19 und 20 ist dargestellt, wie der Schnittschutz 1 im schwenkbaren Zustand 27 entweder um das erste Schwenkgelenk 14, wie in Fig. 20 dargestellt, schwenkbar ist oder um das zweite Schwenkgelenk 15, wie in Fig. 19 dargestellt, schwenkbar ist. Ob die beiden Teilelemente 7, 8 um das erste Schwenkgelenk 14 oder um das zweite Schwenkgelenk 15 schwenkbar sind, kann der Benutzer frei entscheiden. Damit ist die Handhabbarkeit des Schnittschutzes 1 vereinfacht; der Bediener kann frei entscheiden, ob er den Schnittschutz 1 an einem der Schwenkgelenke 14, 15 öffnet, ob er beide Schwenkgelenke 14, 15 öffnet oder ob er den Schnittschutz 1 verrastet haben möchte.

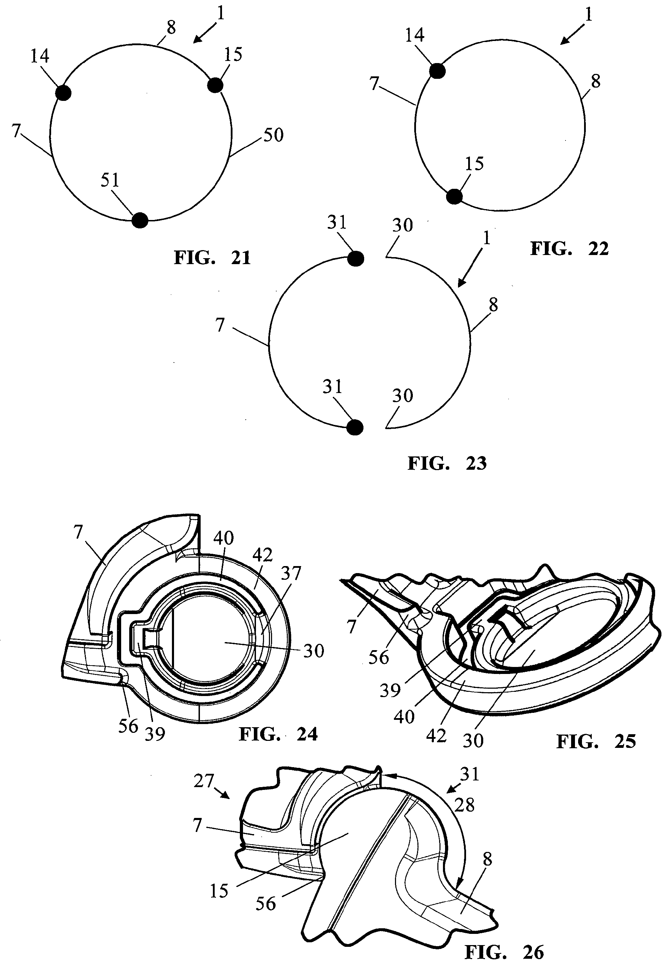

In Fig. 21 ist beispielhaft gezeigt, dass der Schnittschutz ein drittes Teilelement 50 aufweisen kann. Hierfür ist vorgesehen, dass der Schnittschutz 1 eine weitere Verbindung, insbesondere ein drittes Schwenkgelenk 51, aufweist. Im Ausführungsbeispiel nach Fig. 21 ist zwischen dem ersten Teilelement 7 und dem zweiten Teilelement 8 das erste Schwenkgelenk 14 angeordnet, zwischen zweitem Teilelement 8 und drittem Teilelement 50 das zweite Schwenkgelenk 15 angeordnet, und zwischen drittem Teilelement 50 und erstem Teilelement 7 das dritte Schwenkgelenk 51 angeordnet. Auch in diesem Ausführungsbeispiel bestehen die Schwenkgelenke 14, 15, 51 aus Rastzapfen 30 und Rastaufnahmen 31, wobei an jedem Teilelement 7, 8, 50 jeweils ein Rastzapfen 30 und eine Rastaufnahme 31 angeordnet ist. Im Ausführungsbeispiel sind die Teilelemente 7, 8, 50 Gleichteile. Sie sind teilkreisförmig und umspannen einen Bogen von jeweils 120°.

In Fig. 22 ist dargestellt, wie das erste Teilelement 7 und das zweite Teilelement 8 Bogen unterschiedlicher Länge umspannen können. Hierbei sind die beiden Teilelemente 7, 8 keine Gleichteile.

In Fig. 23 ist gezeigt, wie am ersten Teilelement 7 an beiden Enden jeweils eine Rastaufnahme 31 angeordnet ist. Am zweiten Teilelement 8 ist an beiden Enden jeweils ein Rastzapfen 30 angeordnet. Der Rastzapfen 30 kann mit der Rastaufnahme 31 verrastet werden, wodurch das Schwenkgelenk 14, 15 entsteht. Die Teilelemente 7, 8 sind in diesem Ausführungsbeispiel keine Gleichteile.

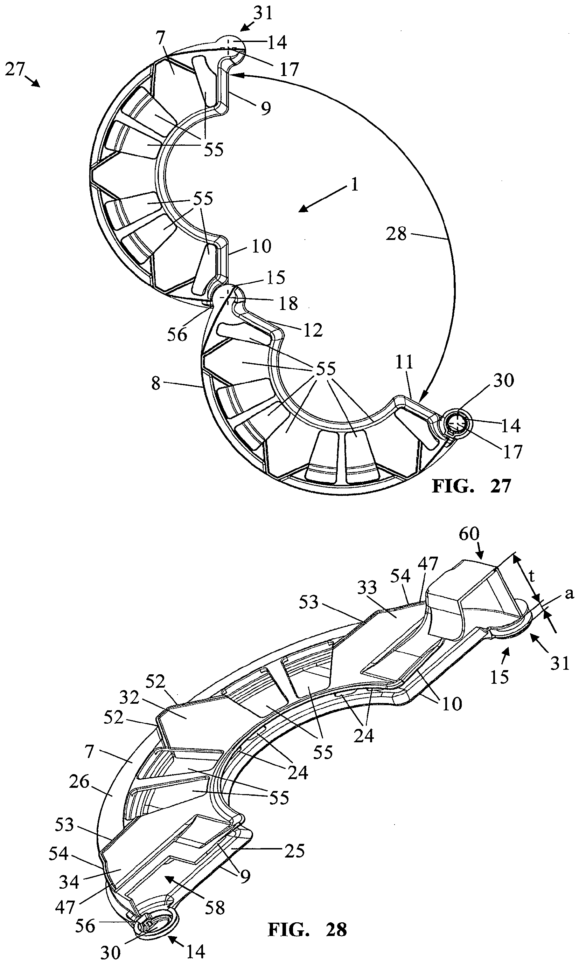

Die Figuren 24 bis 27 zeigen eine weitere Ausführungsvariante des Schnittschutzes 1. Am Teilelement 7 ist ein Anschlag 56 im Bereich des Schwenkgelenks 15 angeformt, insbesondere im Bereich des Rastzapfens 30. Ist im offenen Zustand 27 (Fig. 26, 27) des Schnittschutzes 1 das zweite Teilelement 8 bis zum Maximalwinkel 28 geschwenkt, so liegt das zweite Teilelement 8 am Anschlag 56 des ersten Teilelements 7 an. Der Anschlag 56 des ersten Teilelements 7 liegt in dieser Position im Bereich der Rastaufnahme 31 des zweiten Teilelements 8 an. Damit kann in dieser Ausführungsvariante das zweite Teilelement 8 höchstens bis zum Maximalwinkel 28 um das erste Teilelement 7 verschwenkt werden. Ein Trennen der beiden Teilelemente 7, 8 durch einen zu großen Öffnungswinkel ist damit durch den Anschlag 56 unterbunden.

Der Anschlag 56 ist derart am ersten Teilelement 7 angeordnet, dass das zweite Teilelement 8 genau bis zum Maximalwinkel 28 verschwenkt werden kann und anschließend am Anschlag 56 anliegt. Im Ausführungsbeispiel steht der Anschlag 56 aus der Ebene des Halters 42 hervor. Der Anschlag 56 steht senkrecht zum Halter 42. Der Anschlag 56 endet etwa am Übergang des Teilelements 7 auf den Halter 42. In Draufsicht (Fig. 24) endet der Anschlag etwa in Höhe der Nase 39 des Rastzapfens 30. Die Breite des Anschlags 56 entspricht etwa der Höhe des Anschlags 56. Die Fläche des Anschlags 56, mit welcher der Anschlag 56 am zweiten Teilelement 8 anliegt, ist gekrümmt ausgebildet, so dass die Fläche des Anschlags 56 bei Anliegen am zweiten Teilelement 8 flächig an der gekrümmten Anlagefläche des zweiten Teilelements 8 anliegt.

Aufgrund der identischen Ausbildung des ersten Teilelements 7 und des zweiten Teilelements 8 ist ein identischer Anschlag 56 auch am zweiten Teilelement 8 ausgebildet.

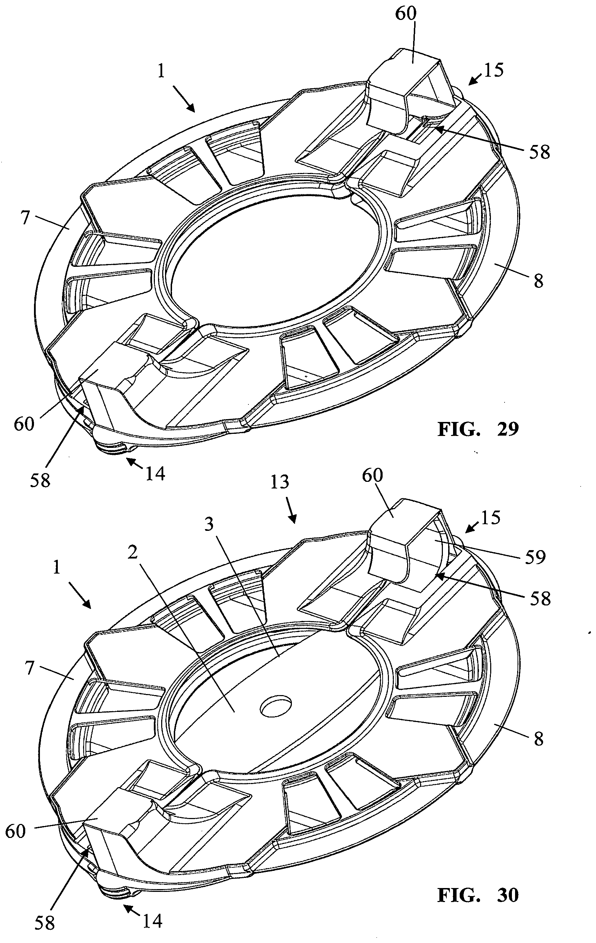

Die Figuren 28 bis 30 zeigen eine weitere Ausführungsvariante für den Schnittschutz 1. Bei dieser Ausführungsvariante kann ein Werkzeugs 2 aufgenommen werden, welches Messerklingen 59 besitzt, die aus der Schnittebene herausragen, in der das Werkzeug 2 im Betrieb rotiert. In Fig. 28 ist das erste Teilelement 7 separat dargestellt. In den Figuren 29 und 30 ist der Schnittschutz 1 im Schutzzustand 13 dargestellt, wobei beide Teilelemente 7, 8 identisch zum ersten Teilelement 7 der Fig. 28 ausgeführt sind.

Am zweiten Ende 10 des ersten Teilelements 7, nämlich im Bereich der Rastaufnahme 31, ist eine Schale 60 angeordnet. Die Schale 60 ist an der zweiten Seitenwand 26 ausgebildet und ragt aus der Schnittebene des Werkzeugs 2 heraus. Die Schale 60 steht seitlich über das zweite Ende 10 über, so dass die Schale 60 seitlich mit der Rastaufnahme 31 abschließt. Diese Seite der Schale 60 ist offen, damit ein Werkzeug 2 eingelegt werden kann. Auch im Schutzzustand 13 des Schnittschutzes 1 (Fig. 29, 30) bleibt diese Seite offen.

Am ersten Ende 9 des ersten Teilelements 7, nämlich im Bereich des Rastzapfens 30, besitzt die zweite Seitenwand 26 eine Ausnehmung 58. Das als zweiflügeliges Blatt 3 ausgeführte Werkzeug 2 besitzt an jedem Flügel eine Messerklinge 59. Das Werkzeug 2 wird zunächst in das erste Teilelement 7 eingelegt. Hierbei liegt eine Messerklinge 59 in der Schale 60 und die andere Messerklinge 59 in der Ausnehmung 58. Anschließend werden die beiden Teilelemente 7, 8 miteinander verrastet, so dass sich der Schnittschutz 1 im Schutzzustand 13 befindet (Fig. 30). Hierbei liegt eine Messerklinge 59 des Werkzeugs 2 in der Schale 60 des ersten Teilelements 7 und in der Ausnehmung 58 des zweiten Teilelements 8. Die andere Messerklinge 59 liegt in der Schale 60 des zweiten Teilelements 8 und in der Ausnehmung 58 des ersten Teilelements 7.

In sämtlichen Ausführungsvarianten kann vorgesehen sein, dass die Teilelemente 7, 8 im Schutzzustand 13, zusätzlich zu den verrasteten Schwenkgelenken 14, 15, formschlüssig miteinander verbunden sind, beispielsweise mit einer Nut-Feder-Verbindung im Bereich der Halbschalen. Hierbei ist an einem Ende 9, 10 des Teilelements 7, 8, 11, 12 eine Nut angeformt. Am anderen Ende 10, 9, 12, 11 des Teilelements 7, 8 ist ein Steg angeformt. Der Steg und die Nut liegen zweckmäßig in einer Ebene, die parallel zur Schnittebene ausgerichtet ist. Im Schutzzustand greift der Steg in die Nut nach Art einer Nut-Feder-Verbindung. Die Nut-Feder-Verbindung unterstützt die Stabilität des Schnittschutzes 1 im Schutzzustand 13.

In sämtlichen Ausführungsbeispielen bestehen die Teilelemente 7, 8 und damit der Schnittschutz 1 aus Kunststoff. Die Teilelemente 7, 8 sind im Kunststoffspritzgussverfahren hergestellt. In den Ausführungsbeispielen, in welchen die Teilelemente 7, 8 Gleichteile darstellen, kann bei der Herstellung dieselbe Kunststoffspritzgussform für beide Teilelemente 7, 8 verwendet werden.

In sämtlichen Ausführungsvarianten bezeichnen gleiche Bezugszeichen gleiche Bauteile.

## Patentansprüche

1. Mehrteiliger Schnittschutz (1) für ein in einer Schnittebene rotierbares Werkzeug (2), bestehend aus einem ersten Teilelement (7) und zumindest einem weiteren Teilelement (8), wobei die Teilelemente (7, 8) an ihren Enden (9, 10, 11, 12) miteinander verbunden sind und einen geschlossenen Umfang bilden, wobei gegenüberliegende erste Enden (9, 11) der Teilelemente (7, 8) unter Ausbildung eines Schwenkgelenkes (14) miteinander verbunden sind und die zweiten Enden (10, 12) der Teilelemente (7, 8) miteinander lösbar festgelegt sind,
**dadurch gekennzeichnet,**
**dass** das Schwenkgelenk (14) aus einer Rastaufnahme (31) und einem Rastzapfen (30) gebildet ist, wobei der Rastzapfen (30) am ersten Teilelement (7) und die Rastaufnahme (31) am zweiten Teilelement (8) angeordnet ist, und am ersten Teilelement (7) und am zweiten Teilelement (8) jeweils ein Rastzapfen (30) und eine Rastaufnahme (31) vorgesehen sind, wobei die Rastaufnahme (31) und der Rastzapfen (30) im verrasteten Zustand jeweils ein Schwenkgelenk (14) bilden, und die Rastaufnahme (31) und der Rastzapfen durch Lösen der Verrastung zu trennen sind.

2. Schnittschutz nach Anspruch 1,
**dadurch gekennzeichnet, dass** der Rastzapfen (30) eine Schräge (41) besitzt, und dass das erste Teilelement (7) um das zweite Teilelement (8) bis zu einem Maximalwinkel (28) schwenkbar ist, und dass bei Schwenken des ersten Teilelements (7) um das zweite Teilelement (8) über den Maximalwinkel (28) hinaus die Rastaufnahme (31) über die Schräge (41) des Rastzapfens (30) rutscht und die Verrastung löst.

3. Schnittschutz nach Anspruch 1 oder 2,
**dadurch gekennzeichnet, dass** am ersten Teilelement (7) ein Anschlag (56) für das zweite Teilelement (8) ausgebildet ist, und dass der Anschlag (56) das Schwenken des ersten Teilelements (7) um das zweite Teilelement (8) bis zu einem Maximalwinkel (28) begrenzt.

4. Schnittschutz nach einem der Ansprüche 1 bis 3,
**dadurch gekennzeichnet, dass** die Teilelemente (7, 8) Gleichteile sind.

5. Schnittschutz nach einem der Ansprüche 1 bis 4,
**dadurch gekennzeichnet, dass** das erste Teilelement (7) und das zweite Teilelement (8) biegesteif ausgeführt sind.

6. Schnittschutz nach einem der Ansprüche 1 bis 5,
**dadurch gekennzeichnet, dass** das Teilelement (7, 8) als Aufnahmeprofil (44) ausgebildet ist, wobei das Aufnahmeprofil (44) zwei sich gegenüberliegende Seitenwände (25, 26) besitzt.

7. Schnittschutz nach Anspruch 6,
**dadurch gekennzeichnet, dass** die Seitenwände (25, 26) parallel und mit einem Seitenwandabstand (s) angeordnet sind, und dass die Seitenwände (25, 26) über eine Stirnverbindung (45) verbunden sind.

8. Schnittschutz nach Anspruch 6 oder 7,
**dadurch gekennzeichnet, dass** an der ersten Seitenwand (25) mindestens ein erster Materialausbruch (24) vorgesehen ist.

9. Schnittschutz nach Anspruch 8,
**dadurch gekennzeichnet, dass** an der zweiten Seitenwand (26) mindestens ein zweiter Materialausbruch (55) vorgesehen ist, wobei der erste Materialausbruch (24) versetzt zum zweiten Materialausbruch (55) angeordnet ist und vorzugsweise an der zweiten Seitenwand (26) gegenüberliegend zum ersten Materialausbruch (24) Material vorhanden ist.

10. Schnittschutz nach einem der Ansprüche 6 bis 9,
**dadurch gekennzeichnet, dass** die an einer Seitenwand (25, 26) von allen Materialausbrüchen (24, 55) geöffneten Flächen in Summe mindestens 10% der Oberfläche dieser Seitenwand (25, 26) entsprechen.

11. Schnittschutz nach einem der Ansprüche 6 bis 10,
**dadurch gekennzeichnet, dass** an einer Seitenwand (25, 26) eine Auflagefläche ausgebildet ist, wobei das Werkzeug (2) an der Auflagefläche mindestens teilweise anliegt.

12. Schnittschutz nach einem der Ansprüche 6 bis 11,
**dadurch gekennzeichnet, dass** das Aufnahmeprofil (44) bogenförmig, insbesondere teilkreisförmig, ausgebildet ist und insbesondere der Bogen des Aufnahmeprofils (44) 180° umspannt.

13. Schnittschutz nach einem der Ansprüche 1 bis 12,
**dadurch gekennzeichnet, dass** im Teilelement (7, 8) mindestens eine trichterförmige Einführschräge (54) ausgebildet ist.

14. Schnittschutz nach einem der Ansprüche 1 bis 13,
**dadurch gekennzeichnet, dass** am Teilelement (7, 8) im Bereich des Schwenkgelenks (14, 15) eine Schale (46, 60) ausgebildet ist, und dass die Schale (46, 60) aus der Schnittebene herausragt.

## Claims

1. Multi-part cut protection device (1) for a tool (2) which is rotatable in a cutting plane, the device (1) comprising a first sub-element (7) and at least one further sub-element (8), wherein the sub-elements (7, 8) are joined to each other at their ends (9, 10, 11, 12) and form a closed circumference, wherein opposite first ends (9, 11) of the sub-elements (7, 8) are joined to each other while forming a swivel joint (14) and the second ends (10, 12) of the sub-elements (7, 8) are releasably fixed to each other,
**characterised in that**
the swivel joint (14) is formed from a latching receptacle (31) and a latching pin (30), the latching pin (30) being located on the first sub-element (7) and the latching receptacle (31) being located on the second sub-element (8), and **in that** a latching pin (30) and a latching receptacle (31) each are provided on the first sub-element (7) and on the second sub-element (8), wherein the latching receptacle (31) and the latching pin (30) form a swivel joint (14) in the latched state and the latching receptacle (31) and the latching pin can be separated by releasing the latch.

2. Cut protection device according to claim 1,
**characterised in that** the latching pin (30) has a chamfer (41), and **in that** the first sub-element (7) is pivotable about the second sub-element (8) up to a maximum angle (28), and **in that**, if the first sub-element (7) pivots about the second sub-element (8) beyond the maximum angle (28), the latching receptacle (31) slides over the chamfer (41) of the latching pin (30) and releases the latch.

3. Cut protection device according to claim 1 or 2,
**characterised in that** a stop (56) for the second sub-element (8) is formed on the first sub-element (7), and **in that** the stop (56) limits the pivoting of the first sub-element (7) about the second sub-element (8) to a maximum angle (28).

4. Cut protection device according to any of claims 1 to 3,
**characterised in that** the sub-elements (7, 8) are identical parts.

5. Cut protection device according to any of claims 1 to 4,
**characterised in that** the first sub-element (7) and the second sub-element (8) are designed to be rigid.

6. Cut protection device according to any of claims 1 to 5,
**characterised in that** the sub-element (7, 8) is designed as a locating profile (44), the locating profile (44) having two opposite side walls (25, 26).

7. Cut protection device according to claim 6,
**characterised in that** the side walls (25, 26) are arranged in parallel and at a side wall distance (s), and **in that** the side walls (25, 26) are joined via an end joint (45).

8. Cut protection device according to claim 6 or 7,
**characterised in that** at least one first material break-out (24) is provided on the first side wall (25).

9. Cut protection device according to claim 8,
**characterised in that** at least one second material break-out (55) is provided on the second side wall (26), the first material break-out (24) being offset relative to the second material break-out (55) and material being preferably present at the second side wall (26) opposite the first material break-out (24).

10. Cut protection device according to any of claims 6 to 9,
**characterised in that** the sum of the areas opened up at a side wall (25, 26) by all material break-outs (24, 55) corresponds to at least 10% of the surface area of this side wall (25, 26).

11. Cut protection device according to any of claims 6 to 10,
**characterised in that** a locating surface is formed on a side wall (25, 26), wherein the tool (2) is in at least partial contact with the locating surface.

12. Cut protection device according to any of claims 6 to 11,
**characterised in that** the locating profile (44) is designed to be arcuate, having the shape of a circular segment in particular, and **in that** the arc of the locating profile (44) spans 180 degrees in particular.

13. Cut protection device according to any of claims 1 to 12,
**characterised in that** at least one funnel-shaped feed slant (54) is formed in the sub-element (7, 8).

14. Cut protection device according to any of claims 1 to 13,
**characterised in that** a shell (46, 60) is formed on the sub-element (7, 8) in the region of the swivel joint (14, 15), and **in that** the shell (46, 60) projects from the intersecting plane.

## Revendications

1. Protection contre les coupures (1) en plusieurs parties, pour un outil (2) tournant dans un plan de coupe, composée d'un premier élément (7) et d'au moins un autre élément (8), les éléments (7, 8) étant reliés au niveau de leurs extrémités (9, 10, 11, 12) et formant une circonférence fermée, les premières extrémités opposées (9, 11) des éléments (7, 8) étant reliées en formant une articulation pivotante (14), et les secondes extrémités (10, 12) des éléments (7, 8) étant fixées l'une à l'autre de manière amovible,
**caractérisée en ce que** l'articulation pivotante (14) est formée à partir d'un logement d'encliquetage (31) et d'un tourillon d'encliquetage (30), le tourillon d'encliquetage (30) étant disposé sur le premier élément (7), et le logement d'encliquetage (31) sur le deuxième élément (8), et un tourillon d'encliquetage (30) et un logement d'encliquetage (31) étant prévus sur le premier élément (7) et sur le deuxième élément (8), et le logement d'encliquetage (31) et le tourillon d'encliquetage (30) formant à l'état verrouillé une articulation pivotante (14), et le logement d'encliquetage (31) et le tourillon d'encliquetage pouvant être séparés grâce à la suppression du verrouillage.

2. Protection contre les coupures selon la revendication 1,
**caractérisée en ce que** le tourillon d'encliquetage (30) présente un biseau (41), et **en ce que** le premier élément (7) est apte à pivoter sur le deuxième élément (8) jusqu'à un angle maximal (28), et **en ce que** lors du pivotement du premier élément (7) sur le deuxième élément (8) au-delà de l'angle maximal (28), le logement d'encliquetage (31) glisse sur le biseau (41) du tourillon d'encliquetage (30) et supprime le verrouillage.

3. Protection contre les coupures selon la revendication 1 ou 2,
**caractérisée en ce que** sur le premier élément (7) est formée une butée (56) pour le deuxième élément (8), et **en ce que** la butée (56) limite le pivotement du premier élément(7) sur le deuxième élément (8) jusqu'à un angle maximal (28).

4. Protection contre les coupures selon l'une des revendications 1 à 3,
**caractérisée en ce que** les éléments (7, 8) sont des pièces identiques.

5. Protection contre les coupures selon l'une des revendications 1 à 4,
**caractérisée en ce que** le premier élément (7) et le deuxième élément (8) sont rigides en flexion.

6. Protection contre les coupures selon l'une des revendications 1 à 5,
**caractérisée en ce que** l'élément (7, 8) est conçu comme un profilé de logement (44), ledit profilé de logement (44) présentant deux parois latérales opposées (25, 26).

7. Protection contre les coupures selon la revendication 6,
**caractérisée en ce que** les parois latérales (25, 26) sont disposées parallèlement et avec un écartement de parois latérales (s), et **en ce que** les parois latérales (25, 26) sont reliées par une liaison frontale (45).

8. Protection contre les coupures selon la revendication 6 ou 7,
**caractérisée en ce qu'**il est prévu sur la première paroi latérale (25) au moins un premier évidement de matière (24).

9. Protection contre les coupures selon la revendication 8,
**caractérisée en ce qu'**il est prévu sur la deuxième paroi latérale (26) au moins un deuxième évidement de matière (55), le premier évidement de matière (24) étant décalé par rapport au deuxième évidement de matière (55), et de la matière étant prévue de préférence sur la deuxième paroi latérale (26) en face du premier évidement de matière (24).

10. Protection contre les coupures selon l'une des revendications 6 à 9,
**caractérisée en ce que** les surfaces ouvertes par tous les évidements de matière (24, 55), sur une paroi latérale (25, 26), correspondent au total à au moins 10% de la surface de cette paroi latérale (25, 26).

11. Protection contre les coupures selon l'une des revendications 6 à 10,
**caractérisée en ce qu'**une surface d'appui est formée sur une paroi latérale (25, 26), l'outil (2) étant au moins en partie appliqué contre la surface d'appui.

12. Protection contre les coupures selon l'une des revendications 6 à 11,
**caractérisée en ce que** le profilé de logement (44) a une forme courbe, en particulier la forme d'un cercle partiel, et la courbe du profilé de logement (44) couvre en particulier 180°.

13. Protection contre les coupures selon l'une des revendications 1 à 12,
**caractérisée en ce qu'**au moins un biseau d'introduction en forme d'entonnoir (54) est formé dans l'élément (7, 8).

14. Protection contre les coupures selon l'une des revendications 1 à 13,
**caractérisée en ce qu'**une coque (46, 60) est formée sur l'élément (7, 8), dans la zone de l'articulation pivotante (14, 15), et **en ce que** la coque (46, 60) dépasse du plan de coupe.
